# EUROPÄISCHE PATENTANMELDUNG

(11) **EP 4 328 338 A1**
(43) Veröffentlichungstag der Anmeldung: **28.02.2024**
(21) Anmeldenummer: 22192408.7
(22) Anmeldetag: 26.08.2022
(51) Int. Cl.: C22B 3/22, C22B 7/00, H01M 4/04, H01M 4/48, H01M 10/54, H01M 4/58

(54) **VERFAHREN ZUR AUFBEREITUNG VON VERBRAUCHTEM KATHODENMATERIAL, THERMISCHER REAKTOR UND VERWENDUNG**

(71) Anmelder: IBU-tec advanced materials AG, 99425 Weimar (DE); Blackstone Technology Holding AG, 6340 Baar (CH); Blackstone Technology GmbH, 04720 Döbeln (DE)
(72) Erfinder: SCHLOSSER, Arndt, 84533 Stammham (DE); RENSCH, Toralf, 99425 Weimar (DE); MAI, Sebastian, 99085 Erfurt (DE)
(74) Vertreter: Liedtke & Partner Patentanwälte

(57) **Zusammenfassung**

Die Erfindung betrifft ein Verfahren zur Aufbereitung von verbrauchtem Kathodenmaterial (200) von gebrauchten Lithium-Ionen-Batterien und/oder von Kathodenausschussmaterial (200.1) von fehlerhaft gefertigten und nicht gebrauchten Lithium-Ionen-Batterien zur Herstellung eines Kathodenmaterial-Rezyklats (300), wobei das Verfahren folgende Schritte umfasst:
- Zuführen eines Rohmaterials (100) eines Kathodenmaterials als eine erste flüssige Substanz in eine Anordnung (1),
- Zuführen eines verbrauchten Kathodenmaterials (200) und/oder von Kathodenausschussmaterial als eine zweite flüssige Substanz in die Anordnung (1),
- thermische Behandlung und Umsetzung der ersten flüssigen Substanz und der zweiten flüssigen Substanz in das Kathodenmaterial-Rezyklat (300) in mindestens einer thermischen Behandlungszone (6) der Anordnung (1), und
- Ausbringen des Kathodenmaterial-Rezyklats (300) in Pulverform aus der Anordnung (1).

## Beschreibung

Die Erfindung betrifft ein Verfahren zur Aufbereitung von verbrauchtem Kathodenmaterial, insbesondere verbrauchtem Lithium-Eisen-Phosphat-Kathodenmaterial, von gebrauchten Lithium-Ionen-Batterien zur Herstellung eines Kathodenmaterial-Rezyklats, insbesondere eines Lithium-Eisen-Phosphat-Kathodenmaterial-Rezyklats. Des Weiteren betrifft die Erfindung eine Anordnung zur Aufbereitung von verbrauchtem Kathodenmaterial von gebrauchten Lithium-Ionen-Batterien zur Herstellung eines Kathodenmaterial-Rezyklats.

### Stand der Technik

Lithium-Ionen-Batterien (LIBs) dienen als Batterien für den schnell wachsenden Markt von Elektrofahrzeugen und Netzstromspeichern. Dies führt zu einer großen Nachfrage nach verschiedenen Materialien und Rohstoffen, wie zum Beispiel Lithium, Graphit, Kobalt und Nickel. Daher besteht der Bedarf an neuen Verfahren, die ein Aufbereiten, Reinigen und Regenerieren von Kathodenmaterialien aus gebrauchten Lithium-Ionen-Batterien ermöglichen. Aus der WO2016008813A1 und der DE102018001273A1 sind beispielsweise Verfahren zur Rezyklierung von Kathodenmaterial durch Trennverfahren bekannt.

### Aufgabe

Der Erfindung liegt die Aufgabe zu Grunde, ein verbessertes Verfahren und eine verbesserte Anordnung zur Aufbereitung von verbrauchtem Kathodenmaterial gebrauchter Lithium-Ionen-Batterien anzugeben.

### Lösung

Die Aufgabe wird erfindungsgemäß gelöst durch ein Verfahren zur Aufbereitung von verbrauchtem Kathodenmaterial, insbesondere verbrauchtem Lithium-Eisen-Phosphat-Kathodenmaterial, von gebrauchten Lithium-Ionen-Batterien und/oder Kathodenausschussmaterial, insbesondere Lithium-Eisen-Phosphat-Kathodenausschussmaterial, von gefertigten und nicht gebrauchten, insbesondere fehlerhaft gefertigten, Lithium-Ionen-Batterien zur Herstellung eines Kathodenmaterial-Rezyklats gemäß den Merkmalen des Patentanspruchs 1 oder 8. Hinsichtlich der Anordnung wird die Aufgabe erfindungsgemäß durch die Merkmale des Patentanspruchs 15 oder 16 gelöst.

Vorteilhafte Ausgestaltungen der Erfindung sind Gegenstand der abhängigen Patentansprüche.

Das erfindungsgemäße Verfahren zur Aufbereitung von verbrauchtem Kathodenmaterial von gebrauchten Lithium-Ionen-Batterien und/oder von Kathodenausschussmaterial von gefertigten und nicht gebrauchten, insbesondere fehlerhaft gefertigten, Lithium-Ionen-Batterien zur Herstellung eines Kathodenmaterial-Rezyklats umfasst zumindest folgende Schritte:
- Zuführen eines Rohmaterials (auch Vorläufermaterials oder Ausgangsmaterials genannt) eines Kathodenmaterials (auch unverbrauchtes Kathodenmaterial genannt) als eine erste flüssige Substanz in eine Anordnung zur Aufbereitung,
- Zuführen eines verbrauchten Kathodenmaterials und/oder Kathodenausschussmaterial als eine zweite flüssige Substanz in die Anordnung zur Aufbereitung,
- thermische Behandlung und Umsetzung der ersten flüssigen Substanz und der zweiten flüssigen Substanz in ein Kathodenmaterial-Rezyklat (auch Kathodenaktivmaterial-Rezyklat genannt) in mindestens einer Behandlungszone der Anordnung zur Aufbereitung, und
- Ausbringen des Kathodenmaterial-Rezyklats in Pulverform aus der Anordnung zur Aufbereitung.

Das verbrauchte Kathodenmaterial und/oder Kathodenausschussmaterial kann im gereinigten Zustand oder ungereinigten Zustand in die Anordnung zur Aufbereitung (auch Aufbereitungsanlage oder Recyclinganlage genannt) zugeführt oder aufgegeben werden. Das ausgebrachte Kathodenmaterial-Rezyklat kann direkt zur weiteren Verarbeitung, insbesondere einer Elektrodenbeschichtung, einer Pastenherstellung oder Slurry-Herstellung, verwendet werden. Alternativ kann das ausgebrachte Kathodenmaterial-Rezyklat unverbrauchtem oder neuem Kathodenmaterial zugesetzt, insbesondere mit diesem gemischt, werden und anschließend einer weiteren Verarbeitung, insbesondere einer Elektrodenbeschichten, einer Pastenherstellung oder Slurry-Herstellung, zugeführt werden.

Das Kathodenmaterial und das verbrauchte Kathodenmaterial und/oder Kathodenausschussmaterial kann Material einer Lithium-Ionen-Batterie, einer Natriumbatterie oder einer Zebrabatterie sein. Das Kathodenmaterial und das verbrauchte Kathodenmaterial und/oder Kathodenausschussmaterial kann beispielsweise Lithium-Nickel-Cobalt-Aluminium-Oxid (kurz NCA genannt) gemäß LiNi(x)Co(y)Al(z)O2 ;1>= x>=0,8, 0,15 >= y<=0, 0,05>= z >=0), Lithium-Nickel-Mangan-Cobalt-Oxid (kurz NMCA genannt) gemäß LiNi(x)Mn(y)Co(z)Al(i)O2 mit 0,95>= x >=0,33, 0,5>=y >=0, 0,4>= z >=0, 0,02>= i >= 0, Lithium-Mangan-Eisen-Phosphat-Oxid (kurz LMFP genannt) gemäß LiFe(a)Mn(b)M(c) mit 1 >= a >= 0,1; 0,9 >= b >= 0; 0,25 >= c >= 0; M aus der Gruppe Zn, Mg, Ca, B, Al, LMFP und ternäre Phosphate miteinbeziehen: LiFe(a)Mn(b)M(c) mit 1 >= a >= 0,1; 0,9 >= b >= 0; 0,25 >= c >= 0; M aus der Gruppe Zn, Mg, Ca, B, Al, Lithium-Cobalt-Oxid (kurz LCO genannt) oder Lithium-Nickel-Oxid (kurz LNO genannt), insbesondere LiCoO2, LiMn2O4, LiNiO2, LiNi1/3Mm1/3Co1/3O2 und/oder LiFePO4 umfassen. Bevorzugt ist das verbrauchte Kathodenmaterial und/oder Kathodenausschussmaterial verbrauchtes Lithium-Eisen-Phosphat-Kathodenmaterial (auch kurz LFP-Kathodenmaterial oder LFP-Aktivmaterial genannt) und/oder Lithium-Eisen-Phosphat-Kathodenausschussmaterial (auch kurz LFP-Kathodenausschussmaterial oder LFP-Ausschussmaterial genannt).

Durch das erfindungsgemäße Aufbereiten von verbrauchtem Kathodenmaterial und/oder Kathodenausschussmaterial für Lithium-Ionen-Batterien können negative Auswirkungen eines Abbaus und die Gewinnung neuer Metalle, Rohstofftransporte und der Energieverbrauch bei der Herstellung von Kathodenmaterial verringert werden. Zudem kann eine stetige Versorgung von Kathodenmaterial für Lithium-Ionen-Batterien sichergestellt werden. Mittels des erfindungsgemäßen Verfahrens können kostenintensive Stoffe, wie zum Beispiel Kupfer, Nickel und Kobalt, einfach, energieeffizient und kosteneffizient sowie ressourceneffizient zurückgewonnen und wiederverwertet werden.

Die erste flüssige Substanz und die zweite flüssige Substanz können in der Anordnung zur Aufbereitung beispielsweise mit mindestens einer vorgegebenen Behandlungstemperatur und mindestens einer vorgegebenen Verweildauer in einer inerten Atmosphäre thermisch behandelt werden. Insbesondere werden die erste flüssige Substanz und die zweite flüssige Substanz derart mit einer vorgegebenen Behandlungstemperatur und vorgegebenen Verweildauer thermisch behandelt, dass Zusammensetzungsdefekte in dem verbrauchten Kathodenmaterial geheilt werden.

Die thermische Behandlung der ersten flüssigen Substanz und der zweiten flüssigen Substanz ist insbesondere ein Verfahren, bei welchem mittels eines Heißgasstromes der Anordnung zur Aufbereitung, insbesondere mittels des Heißgasstromes eines Trockners und eines Kalzinierers, das zugeführte verbrauchte Kathodenmaterial und/oder das zugeführte Kathodenausschussmaterial und das zugeführte Rohmaterial oder Vorläufermaterial synthetisiert, getrocknet, zum Beispiel sprühgetrocknet, und/oder kalziniert werden. Dabei erfolgt innerhalb vorgegebener Verweilzeiten von einigen Minuten bis wenigen Stunden aufgrund der fein verteilten direkten Behandlung im Heißgasstrom des Trockners und Kalzinierers ein hinreichend hoher Energieeintrag. Durch die Reduzierung der Flüssigkeitsmenge in dem verbrauchten Kathodenmaterial, dem Kathodenausschussmaterial und dem Rohmaterial/ Vorläufermaterial innerhalb der Verweilzeit und bei entsprechenden Temperaturen, insbesondere im niedrigen Bereich, kann ein Sintern verhindert werden und ein Kathodenmaterial-Rezyklat in Pulverform hergestellt und aus Anordnung zur Aufbereitung ausgebracht werden.

Die erste flüssige Substanz des Rohmaterials wird in der Anordnung zur Aufbereitung, insbesondere in mehreren Schritten, getrocknet und kalziniert. Dazu umfasst die Anordnung zum Beispiel mindestens einen Trockner und einen Kalzinierer. Darüber hinaus kann die Anordnung weitere Trockner und/oder Kalzinierer oder eine Aufbereitungseinheit zur separaten Trocknung und/oder Kalzinierung der beiden flüssigen Substanzen umfassen.

Die zweite flüssige Substanz des verbrauchten Kathodenmaterials und/oder des Kathodenausschussmaterials wird in der Anordnung zur Aufbereitung, insbesondere in mehreren Schritten, getrocknet und kalziniert oder separat getrocknet und/oder separat kalziniert.

Unter Trocknen und Kalzinieren wird insbesondere ein Eintrocknen und Kalzinieren der flüssigen Substanz, insbesondere der Lösung, Aufschlämmung, Suspension, oder eines festen, aber feuchten Ausgangsstoffes verstanden. Dabei erfolgt die thermische Behandlung in einem strömenden Heißgas, welches eine Umsetzung des verbrauchten Kathodenmaterials und/oder des Kathodenausschussmaterials und des Rohmaterials, insbesondere eines Vorläufermaterials, zu dem Kathodenmaterial-Rezyklat durch Synthese und/oder Eintrocknen und Kalzinieren bewirkt. Überraschend wurde festgestellt, dass aufgrund der geringen Verweilzeit und damit geringen Reaktionszeit infolge der erzielten Umsetzung durch Synthese und/oder des erzielten (Ein)Trocknens und Kalzinierens in dem thermischen Reaktor in einem einzigen Schritt sehr feinteilige Partikel mit der korrekten Stöchiometrie für das erhaltene Kathodenmaterial-Rezyklat in Pulverform erzielt werden.

Unter mehreren Schritten wird insbesondere die thermische Behandlung des verbrauchten Kathodenmaterials und/oder des Kathodenausschussmaterials und des Rohmaterials zunächst in einem Trocknungsschritt in einem Trockner, zum Beispiel einem Sprühtrockner, Wirbelschichttrockner oder Pulsationsreaktor oder dergleichen, und in einem anschließenden Kalzinierungsschritt deren Umsetzung zu dem Kathodenmaterial-Rezyklat im Heißgasstrom eines Kalzinierers verstanden. Dabei werden das Rohmaterial, das verbrauchte Kathodenmaterial und/oder das Kathodenausschussmaterial durch extrem feine Verteilung in den Trockner aufgegeben und insbesondere bei Temperaturen von 100°C bis 280°C, insbesondere von 200°C bis 250°C, getrocknet, insbesondere sprühgetrocknet. Anschließend werden das vorgetrocknete Rohmaterial, das vorgetrocknete verbrauchte Kathodenmaterial und/oder das vorgetrocknete Kathodenausschussmaterial in dem Kalzinierer, insbesondere einem Drehrohrofen, im Heißgasstrom mit Verweilzeiten von 10 Minuten bis 120 Minuten, insbesondere von 20 Minuten bis 90 Minuten, zum Beispiel von 20 Minuten bis 45 Minuten, in Kombination mit niedrigen bis hohen Temperaturen von 500°C bis 1.000°C, insbesondere von 600°C bis 800°C, kalziniert und aus diesem als getrocknetes und kalziniertes Kathodenmaterial-Rezyklats ausgebracht.

Dabei kann in einem ersten möglichen Ausführungsbeispiel die Trocknung und Kalzinierung des Rohmaterials und des verbrauchten Kathodenmaterials und/oder des Kathodenausschussmaterials zu dem Kathodenmaterial-Rezyklat durch gemeinsame Synthese und Trocknen und Kalzinieren in der Anordnung zur Aufbereitung erfolgen. In einem zweiten Ausführungsbeispiel erfolgt die Umsetzung des verbrauchten Kathodenmaterials und/oder des Kathodenausschussmaterials zu dem Kathodenmaterial-Rezyklat in separaten Schritten, insbesondere durch ein Vortrocknen in einem separaten Trockner, und/oder ein anschließendes separates Kalzinieren im Heißgasstrom in einem separaten Kalzinierer.

In einem dritten Ausführungsbeispiel erfolgt die Umsetzung des verbrauchten Kathodenmaterials und/oder des Kathodenausschussmaterials zu dem Kathodenmaterial-Rezyklat außerhalb des thermischen Reaktors in einer separaten thermischen Aufbereitungseinheit.

Das erhaltene Kathodenmaterial-Rezyklat des Kalzinierers oder das erhaltene unverbrauchte Kathodenmaterial und das separate erhaltene Kathodenmaterial-Rezyklat der separaten thermischen Aufbereitungseinheit können anschließend einer Nachbehandlungseinheit zugeführt und zu einem homogenisierten Kathodenmaterial-Rezyklat nachbehandelt, insbesondere vereinzelt, desagglomeriert, gestrahlt, gemahlen, gesiebt oder dergleichen, werden. Die Nachbehandlungseinheit ist beispielsweise als ein Rüttler, ein Ultraschallgerät, ein Strahlwerk, ein Mahlwerk, Sieb und/oder Filter ausgebildet.

Das Verfahren unterscheidet sich erheblich von dem aus dem Stand der Technik bekannten Verfahren durch den Energieübertrag und den Umsetzungsablauf durch Synthese und/oder Trocknung und Kalzinierung durch extrem feine Verteilung des verbrauchten Kathodenmaterials und/oder des Kathodenausschussmaterials und des Rohmaterials und deren thermische Behandlung im Heißgasstrom mit vorgegebener Verweilzeit von 10 Minuten bis 120 Minuten, insbesondere von 10 Minuten bis 90 Minuten, bevorzugt beispielsweise von 20 Minuten bis 45 Minuten, wodurch überraschend sehr feinteilige Partikel des Kathodenmaterial-Rezyklats in Pulverform hergestellt werden können. Die jeweilige Verweilzeit legt dabei die Behandlungsdauer und die gewünschte thermische Behandlung des verbrauchten Kathodenmaterials und/oder des Kathodenausschussmaterials und/oder des Rohmaterials fest, ob dieses beispielsweise nur getrocknet oder nur kalziniert oder sowohl getrocknet als auch kalziniert werden soll.

Darüber hinaus kann das homogenisierte Kathodenmaterial-Rezyklat einer Beschichtungseinheit zur Beschichtung einer Elektrode zugeführt werden. Die beschichtete Elektrode kann einer Prüfeinheit zur Prüfung, insbesondere zur Qualitätsprüfung und Identifizierung von Ausschuss-Elektroden (fehlerhafte oder mangelhafte Elektroden), zugeführt werden, wobei eine identifizierte Ausschuss-Elektrode in den Aufbereitungsprozess zurückgeführt wird und eine geprüfte Elektrode einer weiteren Anwendung zugeführt wird. Zur Wiederaufbereitung und Wiederverwertung von gebrauchten Elektroden und optional von AusschussElektroden können diese einer Trennstufe zur Abtrennung von gebrauchtem Kathodenmaterial zugeführt werden.

Die mit der Erfindung erzielten Vorteile bestehen insbesondere darin, dass das Kathodenmaterial-Rezyklat gegenüber herkömmlichen Aufbereitungsverfahren in einem geschlossenen Kreislauf schnell, einfach und umweltfreundlich durch thermische Behandlung, insbesondere Trocknung und Kalzinierung, wiederaufbereitet und wiederverwertet wird. Dabei wird bevorzugt ein Stoffaustritt in eine Umgebung vermieden.

Beispielsweise werden die erste flüssige Substanz und die zweite flüssige Substanz in dem Trockner bei einer Behandlungstemperatur von 120°C bis 280°C, insbesondere von 200°C bis 250°C, getrocknet und bei einer Behandlungstemperatur von 400°C bis 1.000°C, beispielsweise von 500 °C bis 900 °C, insbesondere von 600 °C bis 800 °C, thermisch behandelt, insbesondere kalziniert. Insbesondere wird die zweite flüssige Substanz des verbrauchten Kathodenmaterials und/oder des Kathodenausschussmaterials zeitlich kürzer behandelt als die erste flüssige Substanz des Rohmaterials. Alternativ können die erste flüssige Substanz und die zweite flüssige Substanz zeitlich gleich lang thermisch behandelt werden. Insbesondere wird die erste flüssige Substanz mit einer zweiten Verweilzeit von 10 Minuten bis 120 Minuten, insbesondere bis 90 Minuten, thermisch behandelt. Die zweite flüssige Substanz wird beispielsweise mit einer ersten Verweilzeit von 10 Minuten bis 120 Minuten, insbesondere bis 60 Minuten, zum Beispiel von 20 Minuten bis 45 Minuten, thermisch behandelt.

Die erste flüssige Substanz für das Rohmaterial wird beispielsweise in Form einer ersten Suspension oder ersten Lösung oder ersten Aufschlämmung bereitgestellt und der Anordnung zur Aufbereitung zugeführt. Bevorzugt wird die zweite flüssige Substanz des verbrauchten Kathodenmaterials in Form einer zweiten Suspension oder zweiten Lösung oder zweiten Aufschlämmung bereitgestellt und der Anordnung zur Aufbereitung zugeführt.

Beispielsweise werden die erste flüssige Substanz mit einem ersten Anteil in einem Bereich von 99,5 Vol% bis 75 Vol% und die zweite flüssige Substanz mit einem zweiten Anteil in einem Bereich von 0,5 Vol% bis 25 Vol.% in den thermischen Reaktor geführt. Das Rohmaterial (= erste flüssige Substanz) und das verbrauchte Kathodenmaterial und/oder das Kathodenausschussmaterial (= zweite flüssige Substanz) können beispielsweise in einem Verhältnis von 2:1, bevorzugt 3:1 oder 4:1, in den thermischen Reaktor aufgegeben werden. Bevorzugt ist der Anteil der zweiten Substanz des verbrauchten Kathodenmaterials geringer als der Anteil der ersten flüssigen Substanz des Rohmaterials. Das verbrauchte Kathodenmaterial und/oder das Kathodenausschussmaterial kann beispielsweise mit einem Anteil von bis zu 25% Vol.% und das Rohmaterial kann mit einem Anteil von mindestens 75 Vol.% oder größer zugeführt werden.

Darüber hinaus können die erste flüssige Substanz und die zweite flüssige Substanz jeweils mittels eines Trägerfluids der Anordnung zur Aufbereitung, insbesondere einem oder mehreren Trockner/n oder einem oder mehreren Kalzinierern, zugeführt werden. Beispielsweise ist das Trägerfluid ein Gas, insbesondere Umgebungsluft oder Sauerstoff oder auch ein inertes Gas, wie z. B. Stickstoff. Eine Aufgabe der flüssigen Substanzen in den jeweiligen Trockner kann dabei im Bereich des Behandlungsraums (auch Reaktionsraum oder Prozessraum genannt) und/oder im Bereich einer Brennkammer bei einem direkt gefeuerten Trockner und/oder Kalzinierer erfolgen. Die Wahl des Aufgabeortes in die Anordnung zur Aufbereitung richtet sich danach, welche thermische Behandlung erzielt werden soll. Durch die Wahl des Aufgabeortes werden insbesondere die Behandlungsdauer und die Temperatureinwirkung verändert.

Darüber hinaus kann das Kathodenmaterial-Rezyklat nach dem Ausbringen aus der Anordnung, insbesondere aus dem Kalzinierer, nachbehandelt, insbesondere vereinzelt oder desagglomeriert, zum Beispiel Ultraschall behandelt, gerüttelt oder gemahlen, werden. Hierdurch kann das ausgebrachte Pulver des Kathodenmaterial-Rezyklats in Bezug auf Partikelgröße und Partikelgrößenverteilung homogenisiert werden.

Die erfindungsgemäße Anordnung zur Aufbereitung von verbrauchtem Kathodenmaterial von gebrauchten Lithium-Ionen-Batterien und/oder von Kathodenausschussmaterial von gefertigten und nicht gebrauchten, insbesondere fehlerhaft gefertigten, Lithium-Ionen-Batterien zur Herstellung eines Kathodenmaterial-Rezyklats umfasst mindestens
- einen ersten Materialeingang zur Aufgabe des Rohmaterials eines Kathodenmaterials als eine erste flüssige Substanz in die Anordnung zur Aufbereitung, insbesondere in einen Trockner,
- einen zweiten Materialeingang zur Aufgabe des verbrauchten Kathodenmaterials und/oder des Kathodenausschussmaterials als eine zweite flüssige Substanz in die Anordnung zur Aufbereitung, insbesondere in den Trockner,
- mindestens einen Behandlungsraum, insbesondere in dem Trockner und in einem Kalzinierer, zur thermischen Behandlung und Umsetzung der ersten flüssigen Substanz und der zweiten flüssigen Substanz in ein Kathodenmaterial-Rezyklat und
- einen Materialausgang zur Ausgabe des Kathodenmaterial-Rezyklats in Pulverform aus der Anordnung zur Aufbereitung, insbesondere aus dem Kalzinierer.

Alternativ wird die Aufgabe erfindungsgemäß durch eine Anordnung zur Aufbereitung von verbrauchtem Kathodenmaterial von gebrauchten Lithium-Ionen-Batterien und/oder von Kathodenausschussmaterial von gefertigten und nicht gebrauchten, insbesondere fehlerhaft gefertigten, Lithium-Ionen-Batterien zur Herstellung eines Kathodenmaterial-Rezyklats gelöst, wobei die Anordnung mindestens
- einen Trockner und einen Kalzinierer mit einem ersten Materialeingang zur Aufgabe eines Rohmaterials eines Kathodenmaterials als eine erste flüssige Substanz und jeweils einer thermischen Behandlungszone zur thermischen Behandlung und Umsetzung der ersten flüssigen Substanz in ein Kathodenmaterial sowie einem ersten Materialausgang zum Ausbringen des, insbesondere neuen oder ungebrauchten, Kathodenmaterials in Pulverform aus dem Kalzinierer, und
- eine separate thermische Aufbereitungseinheit mit einem zweiten Materialeingang zur Aufgabe des verbrauchten Kathodenmaterials und/oder des Kathodenausschussmaterials als eine zweite flüssige Substanz und zur separaten thermischen Behandlung und Umsetzung der zweiten flüssigen Substanz in ein Kathodenmaterial-Rezyklat in Pulverform in der separaten thermischen Aufbereitungseinheit und einem zweiten Materialausgang zum Ausbringen des Kathodenmaterial-Rezyklats in Pulverform aus der Aufbereitungseinheit umfasst.

Der Trockner ist beispielsweise ein Wirbelschichtreaktor, ein Trockner, insbesondere ein Sprühtrockner , ein Pulsationsreaktor oder ein anderer Raum, wie ein Behältnis oder ein Behälter, der eingerichtet ist, um darin unter definierten Bedingungen, insbesondere thermische Bedingungen und/oder Druckbedingungen, bestimmte Reaktionen ablaufen zu lassen und/oder steuern zu können, insbesondere die beiden flüssigen Substanzen oder nur eine dieser zu trocknen.

Der Kalzinierer ist beispielsweise ein Drehrohrofen oder ein anderer Raum, wie ein Behältnis oder ein Behälter, der eingerichtet ist, um darin unter definierten Bedingungen, insbesondere thermische Bedingungen und/oder Druckbedingungen, bestimmte Reaktionen ablaufen zu lassen und/oder steuern zu können, insbesondere die beiden flüssigen Substanzen oder nur eine dieser zu kalzinieren.

Die thermische Behandlung des verbrauchten Kathodenmaterials und/oder des Kathodenausschussmaterials und/oder des Rohmaterials oder Vorläufermaterials und deren Umsetzung in der Anordnung zur Aufbereitung durch Synthese und/oder Trocknung und Kalzinierung erfolgt in einem in sich geschlossenen System. Ein solches geschlossenes System oder ein solcher Kreislauf zur Aufbereitung mit Synthese- und/oder Trocknungs- und/oder Kalzinierungsverfahren ist besonders umweltschonend und ressourcensparend. Dabei erfolgt die Synthese und/oder Trocknung und/oder Kalzinierung im direkten Kontakt mit dem Heißgasstrom in einem Kreislauf innerhalb der Anordnung zur Aufbereitung, insbesondere im Trockner, im Kalzinierer und/oder in der Aufbereitungseinheit.

Darüber hinaus kann dem Kalzinierer und optional der Aufbereitungseinheit eine Nachbehandlungseinheit zur Nachbehandlung und Umsetzung des Kathodenmaterials in Pulverform und/oder des Kathodenmaterial-Rezyklats in Pulverform in ein homogenisiertes Kathodenmaterial-Rezyklat nachgeschaltet sein.

Die Anordnung eignet sich zur thermischen Behandlung eines verbrauchten Kathodenmaterials und/oder des Kathodenausschussmaterials und eines Rohmaterials und insbesondere zur Herstellung von homogenisierten Kathodenmaterial-Rezyklats in Pulverform mit Partikeln, insbesondere feinteiligen Partikeln im µm-Bereich, beispielsweise mit einer mittleren Partikelgröße von 1 µm bis 15 µm. Unter feinteiligen Partikeln werden insbesondere Pulverpartikel im Mikrobereich verstanden, die beispielsweise Korn- oder Partikelgrößen im Bereich von 1 µm bis 15 µm, insbesondere im Bereich von 2 µm bis 11 µm aufweisen.

Unter dem Behandlungsraum (auch Reaktionsraum genannt) der Anordnung, insbesondere des Trockners und/oder Kalzinierers, wird insbesondere jenes Volumen, beispielsweise Anlagen- oder Reaktorraumvolumen, wie beispielsweise Rohr-, Behälter- und/oder Leitungsvolumen von der Materialeingangsseite des verbrauchten Kathodenmaterials und des Rohmaterials bis hin zur Abkühlung des umgesetzten Kathodenmaterial-Rezyklats vor der Materialausgangsseite und vor einer Abscheidung oder einem Filtern des umgesetzten Kathodenmaterial-Rezyklats in einer Abscheideanordnung verstanden. Der Reaktionsraum ist ein thermischer Behandlungsraum oder Prozessraum, in welchem die zugeführten flüssigen Substanzen des verbrauchten Kathodenmaterials und/oder des Kathodenausschussmaterials und des Rohmaterials stufenweise thermisch behandelt, beispielsweise getrocknet und kalziniert werden.

Des Weiteren kann insbesondere der als Drehrohrofen ausgebildete Kalzinierer in einem bestimmten Winkel in Strömungsrichtung nach unten oder nach oben geneigt sein, so dass eine Förderung des Rohstoffmaterials von der Materialeingangsseite zur Materialausgangsseite unterstützt oder gehemmt (Verweilzeitbeeinflussung) wird.

Der Kalzinierer, wie zum Beispiel der Drehrohrofen, ist beispielsweise mit einem Antrieb verbunden und rotiert um seine eigene Achse. In dem Reaktionsraum des Drehrohrofens erfolgt eine Durchmischung und thermische Behandlung des vorgetrockneten verbrauchten Kathodenmaterials und/oder des vorgetrockneten Kathodenausschussmaterials und des vorgetrockneten Rohmaterials. Insbesondere kann in dem Reaktionsraum zumindest eine chemische Reaktion innerhalb der zugeführten flüssigen Substanzen des vorgetrockneten verbrauchten Kathodenmaterials und/oder des vorgetrockneten Kathodenausschussmaterials und des vorgetrockneten Rohmaterials stattfinden, die zur Einstellung der notwendigen Produkteigenschaften des Kathodenmaterial-Rezyklats führt. Für die chemische Reaktion benötigt der Ausgangsstoff, wie das verbrauchte Kathodenmaterial und/oder das Kathodenausschussmaterial und/oder das Rohmaterial, eine bestimmte Behandlungstemperatur, welche durch die Wärmeübertragungsanordnung eingestellt wird.

Zusätzlich dazu kann eine direkte oder indirekte Beheizung und Kalzinierung der beiden zugeführten flüssigen Substanzen, z. B. mittels eines unmittelbar im Drehrohrofen angeordneten Brenners, erfolgen. Die Erhitzung der beiden flüssigen Substanzen erfolgt somit beispielsweise direkt durch eine mittels des Brenners erzeugte Brennerflamme und einen erzeugten Heißgasstrom. Alternativ erfolgt die Beheizung des Drehrohres indirekt, d.h. über eine Heizmuffel oder Wärmerohre, die das Drehrohr von außen beheizt bzw. beheizen. Beispielsweise umfasst die Anordnung eine Heizanordnung zur direkten oder indirekten Beheizung des Drehrohrofens und eine Wärmeübertrageranordnung, welche thermisch mit dem Drehrohrofen gekoppelt ist. Die Wärmeübertrageranordnung, zum Beispiel zumindest ein Wärmerohr, ist zur Übertragung eines Wärmestroms in den oder aus dem Reaktions- oder thermischen Behandlungsraum angeordnet, um insbesondere eine Behandlungstemperatur im Reaktionsraum in oder an einer Wandung des Drehrohrofens, insbesondere entlang einer Längsausdehnung des Drehrohrofens, variabel einzustellen, insbesondere entlang der Längsausdehnung des Drehrohrofens.

In einer möglichen Weiterbildung der Anordnung erfolgt die thermische Behandlung beim Kalzinieren der jeweils flüssigen Substanzen bei einer Behandlungstemperatur von 100°C bis 1.550°C für einen beispielsweise direkt beheizten Drehrohrofen, von 200 °C bis 1.200 °C für beispielsweise einen indirekt beheizten Drehrohrofen oder von 500 °C bis 800 °C oder auch bei niedrigeren Temperaturen, zum Beispiel von 100°C bis 500°C für einen Trockner und Kalzinierer. Die Einstellung der Behandlungstemperatur erfolgt insbesondere mittels der direkten oder indirekten Beheizung, zum Beispiel mittels einer elektrischen Beheizung, einer befeuerten Beheizung beispielsweise durch Gas und/oder des oder der Wärmerohrs/-e, welches/e den zur Einstellung der Behandlungstemperatur erforderlichen Wärmestrom dem Reaktionsraum zuführen. Dabei können entlang der Längsausdehnung des Drehrohrofens unterschiedliche Temperaturbereiche eingestellt werden, um eine Wärmeverschiebung am Reaktor, insbesondere am Drehrohrofen, einzustellen, insbesondere mit Wärme-/Hitzepunkten drehrohrofeneingangsseitig und Wärmesenken an anderen nachgelagerten Stellen des Drehrohrofens.

Bei der oben genannten Behandlungstemperatur können erwünschte Komponenten im Rohmaterial, insbesondere organische Komponenten, wie z. B. Kohlenstoffketten, oder andere Komponenten wie Hydrate, und/oder im verbrauchten Kathodenmaterial entfernt werden. Ebenso kann die Kristallstruktur des Materials beeinflusst werden. Dies ermöglicht eine verbesserte Produktqualität der hergestellten Partikel.

Darüber hinaus kann die Anordnung eine Beschichtungseinheit zur Beschichtung einer Elektrode mit dem homogenisierten Kathodenmaterial-Rezyklat umfassen. Insbesondere ist die Beschichtungseinheit im Aufbereitungsprozess der Nachbehandlungseinheit nachgeschaltet.

Zusätzlich kann die Anordnung eine Prüfeinheit zur Prüfung der Elektrode, insbesondere einer Einzelelektrode, einer Elektrode in einer Batteriezelle oder eine Elektrode in einem Zellenstapel, und zur Identifizierung einer Ausschuss-Elektrode umfassen. Die identifizierte Ausschuss-Elektrode kann dann in den Aufbereitungsprozess zurückgeführt werden. Die anderen geprüften Elektroden werden einer weiteren Anwendung, insbesondere zum Einbau in eine Batteriezelle oder einen Zellenstapel einer Lithium-Ionen-Batterie, zugeführt. Die Prüfeinheit ist im Aufbereitungsprozess insbesondere der Beschichtungseinheit nachgeschaltet.

Des Weiteren ist eine Trennstufe zur Abtrennung von verbrauchtem Kathodenmaterial einer gebrauchten Elektrode und optional von Kathodenausschussmaterials der Ausschuss-Elektrode vorgesehen. In der Trennstufe erfolgt beispielsweise zunächst die Demontage der Elektrode aus der Batteriezelle oder dem Zellenstapel der Lithium-Ionen-Batterie. Anschließend wird die Elektrode demontiert. Insbesondere wird das verbrauchte Kathodenmaterial (auch Kathodenaktivmaterial genannt) und/oder das Kathodenausschussmaterial von der Elektrode mechanisch getrennt, beispielsweise durch Reiben, Wasserstrahlen oder dergleichen. Alternativ können genutzte oder gebrauchte Elektroden und/oder Ausschusselektroden in Wasser gebracht werden. Dabei löst sich das Bindersystem und es kann eine einfache Trennung von Elektrodenbasismaterial, wie Aluminiumfolie oder Aluminiumträger, und verbrauchtem Kathodenmaterial, wie zum Beispiel LFP-Aktivmaterial, stattfinden. Nach Trennung des Basismaterials, insbesondere des Aluminiums, können die restlichen unlöslichen Bestandteile des verbrauchten Kathodenmaterials abgetrennt werden. Diese restlichen unlöslichen Bestandteile werden zu einer flüssigen Substanz, insbesondere einer wässrigen Suspension, Lösung oder Aufschlämmung, des verbrauchten Kathodenmaterials vorverarbeitet.

Die Trennstufe kann im Aufbereitungsprozess dem Kalzinierer oder der Aufbereitungseinheit vorgeschaltet sein.

Das verbrauchte Kathodenmaterial als flüssige Substanz kann nach der Trennstufe in dem thermischen Reaktor oder der Aufbereitungseinheit getrocknet und/oder kalziniert werden. Dem verbrauchten Kathodenmaterial kann ungebrauchtes Kathodenmaterial während der Trocknung und/oder der Kalzinierung oder danach zugesetzt werden. Nach erfolgter Trocknung und Kalzinierung kann das Kathodenmaterial-Rezyklat, insbesondere ein LFP-Aktivmaterial-Rezyklat (LFP und Kohlenstoff in dem Fall), ungebrauchtem Kathodenmaterial, insbesondere LFP-Material oder LFP-Aktivmaterial, wieder zugesetzt werden und beispielsweise zu neuen Pasten oder Slurries verarbeitet werden.

Eine erfindungsgemäße Verwendung der oben beschriebenen alternativen Anordnungen sieht die Herstellung von Schüttgut, insbesondere Partikeln oder Pulvern, für das homogenisierte Kathodenmaterial-Rezyklat vor.

Ausführungsbeispiele der Erfindung werden im Folgenden anhand von Zeichnungen näher erläutert.

Darin zeigen:
- Figur 1: ein Blockschaltbild eines ersten Ausführungsbeispiels einer erfindungsgemäßen Anordnung zur Aufbereitung von verbrauchtem Kathodenmaterial und/oder Kathodenausschussmaterial zur Herstellung von Kathodenmaterial-Rezyklat,
- Figur 2: ein Blockschaltbild eines zweiten Ausführungsbeispiels einer erfindungsgemäßen Anordnung zur Aufbereitung von verbrauchtem Kathodenmaterial und/oder Kathodenausschussmaterial zur Herstellung von Kathodenmaterial-Rezyklat, und
- Figur 3: ein Blockschaltbild eines dritten Ausführungsbeispiels einer erfindungsgemäßen Anordnung zur Aufbereitung von verbrauchtem Kathodenmaterial und/oder Kathodenausschussmaterial zur Herstellung von Kathodenmaterial-Rezyklat.

Einander entsprechende Teile sind in allen Figuren mit den gleichen Bezugszeichen versehen.

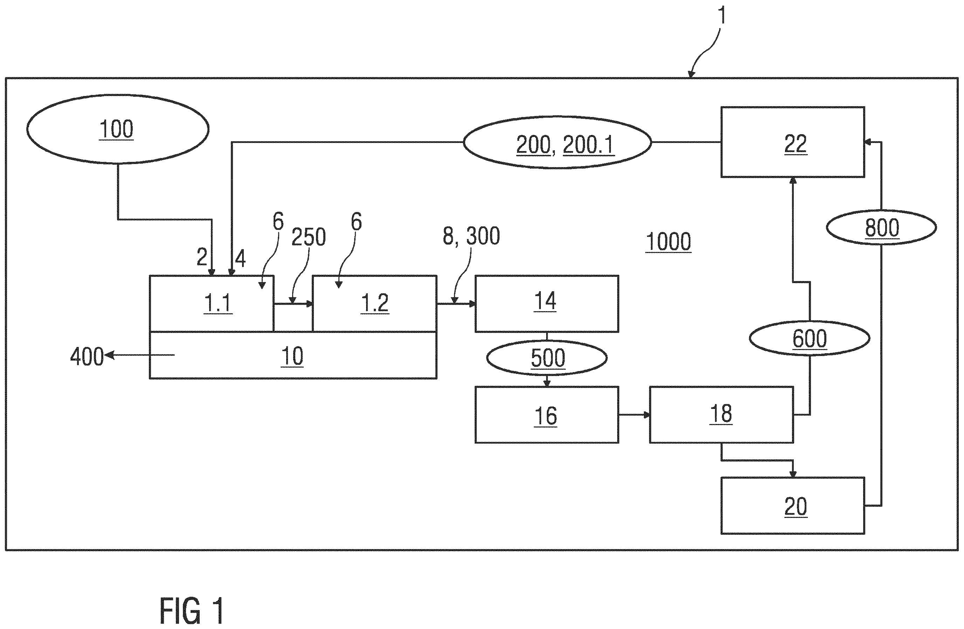

Figur 1 zeigt ein Blockschaltbild eines ersten Ausführungsbeispiels einer Anordnung 1 zur Aufbereitung von verbrauchtem Kathodenmaterial 200 und/oder des Kathodenausschussmaterials 200.1 von nicht näher dargestellten gebrauchten Lithium-Ionen-Batterien.

Die Anordnung 1 (auch Aufbereitungsanlage oder Recycling-Anlage genannt) umfasst einen Trockner 1.1 und einen Kalzinierer 1.2. Der Trockner 1.1 ist beispielsweise als ein Sprühtrockner, Wirbelschichttrockner oder Pulsationsreaktor ausgebildet. Der Kalzinierer 1.2 ist beispielsweise als ein Drehrohrofen ausgebildet.

Der Trockner 1.1 umfasst mindestens einen ersten Materialeingang 2 zur Aufgabe eines Rohmaterials 100 eines Kathodenmaterials als eine erste flüssige Substanz und einen zweiten Materialeingang 4 zur Aufgabe des verbrauchten Kathodenmaterials 200 und/oder des Kathodenausschussmaterials 200.1 als eine zweite flüssige Substanz. Der erste Materialeingang 2 und der zweite Materialeingang 4 können dabei in Längsausdehnung des Trockners 1.1 an einem vorderen Ende in den Trockner 1.1 aufgegeben werden. Alternativ können das verbrauchte Kathodenmaterial 200 und/oder des Kathodenausschussmaterials 200.1 und das Rohmaterial 100 in Längsrichtung gesehen an voneinander beabstandeten Stellen in den Trockner 1.1 aufgegeben werden. Hierzu sind der erste Materialeingang 2 und der zweite Materialeingang 4 (gestrichelte Linien) in Längsausdehnung des Reaktors 1 voneinander beabstandet.

Aus dem Trockner 1.1 wird dann ein getrocknetes Zwischenmaterial 250 dem Kalzinierer 1.2 zur Kalzination des getrockneten Zwischenmaterials 250 und Umsetzung des getrockneten Zwischenmaterials 250 in ein Kathodenmaterial-Rezyklat 300 zugeführt.

Der Trockner 1.1 und der Kalzinierer 1.2 umfassen jeweils einen Behandlungsraum 6 zur thermischen Behandlung und Umsetzung der ersten flüssigen Substanz und der zweiten flüssigen Substanz in das Kathodenmaterial-Rezyklat 300. Am Ausgang des Kalzinierers 1.2 ist ein Materialausgang 8 zur Ausgabe des Kathodenmaterial-Rezyklats 300 in Pulverform aus dem Kalzinierer 1.2 vorgesehen. Beispielsweise weist das Kathodenmaterial-Rezyklat 300 als Endprodukt in Pulverform eine mittlere Partikelgröße oder Korngröße im Millimeteroder Mikrometerbereich auf.

Die Anordnung 1 kann beispielsweise als Trockner 1.1, insbesondere als ein Sprühtrockner, ein Wirbelschichttrockner oder ein Wirbelschichtreaktor, ein Pulsationsreaktor oder als eine andere geeignete Anlage oder ein Behältnis zur Behandlung des verbrauchten Kathodenmaterials 200 und/oder Kathodenausschussmaterials 200.1 und des Rohmaterials 100 ausgebildet sein. Die Anordnung 1 kann als Kalzinierer 1.2 einen Drehrohrofen umfassen.

Der als Drehrohrofen ausgebildete Kalzinierer 1.2 ist bevorzugt rohrförmig ausgebildet und mit einem nicht näher dargestellten Antrieb verbunden, welcher den Drehrohrofen zur Rotation antreibt. Beispielsweise beträgt dessen Drehzahl 0,5 bis 15 Umdrehungen pro Minute, insbesondere 0,5 bis 10 Umdrehungen pro Minute. Die Drehzahl hängt insbesondere von der Baugröße des Drehrohrofens, insbesondere von dessen Abmessungen, wie zum Beispiel vom Durchmesser, der Art und/oder Zusammensetzung des getrockneten Zwischenprodukts 250 des verbrauchten Kathodenmaterials 200 und/oder des Kathodenausschussmaterials 200.1 und des Rohmaterials 100, einem Durchsatzvolumen und/oder der notwendigen Verweilzeit des getrockneten Zwischenprodukts 250 des verbrauchten Kathodenmaterials 200 und/oder des Kathodenausschussmaterials 200.1 und des Rohmaterials 100 im Drehrohrofen ab.

Der Kalzinierer 1.2 als Drehrohrofen kann in Bezug auf seine Längsausdehnung leicht geneigt zu einer horizontalen Raumachse x positioniert sein. Insbesondere kann der Kalzinierer 1.2 in Strömungsrichtung des thermisch zu behandelnden getrockneten Zwischenprodukts 250 des verbrauchten Kathodenmaterials 200 und/oder des Kathodenausschussmaterials 200.1 und des Rohmaterials 100 nach unten geneigt sein. Dies unterstützt einen durch die Rotationsbewegung des Drehrohrofens bewirkten Materialtransport des getrockneten Zwischenprodukts 250 des verbrauchten Kathodenmaterials 200 und/oder des Kathodenausschussmaterials 200.1und des Rohmaterials 100 von einer Materialeingangsseite der Anordnung 1 zu einer Materialausgangsseite der Anordnung 1 am Materialausgang 8, an welchem das Kathodenmaterial-Rezyklat 300 in Partikelform ausgetragen wird. Des Weiteren kann das Reaktionsvolumen des als Drehrohrofens ausgebildeten Kalzinierers 1.2 in einem mittleren Abschnitt gegenüber der Materialeingangsseite und der Materialausgangsseite vergrößert sein.

Bevorzugt werden das verbrauchte Kathodenmaterial 200 und/oder das Kathodenausschussmaterial 200.1 und das Rohmaterial 100 in Form von flüssigen Substanzen als eine Lösung, eine Suspension oder eine Aufschlämmung in den Behandlungsraum 6 (auch Reaktionsraum genannt) des Trockners 1.1 eingebracht. Der jeweilige Materialeingang 2, 4 kann beispielsweise eine Pumpe, Förderschnecke oder Dosierschnecke (nicht dargestellt) umfassen. Denkbar ist auch, dass der jeweilige Materialeingang 2, 4 eine Vorwärmeinheit (nicht dargestellt) umfasst, mittels der das verbrauchte Kathodenmaterial 200 und/oder das Kathodenausschussmaterial 200.1 und/oder das Rohmaterial 100 vor dem Einbringen in den Reaktionsraum oder Behandlungsraum 6 des Trockners 1.1 erwärmt wird.

Ferner können die Materialeingänge 2, 4 eine Mischeinheit (nicht dargestellt) umfassen oder strömungstechnisch mit einer solchen verbunden sein. Die Mischeinheit kann zur Mischung des verbrauchten Kathodenmaterials 200 und/oder des Kathodenausschussmaterials 200.1 und des Rohmaterials 100 ausgebildet sein.

Das Kathodenmaterial-Rezyklat 300 in Partikelform oder Pulverform kann direkt am unteren Ende des Kalzinierers 1.2 am Materialausgang 8 ausgetragen werden.

Bevorzugt schließt sich zur Abscheidung des mit einem Gasstrom ausgetragenen Teils des Kathodenmaterial-Rezyklats 300 aus dem Kalzinierer 1.2 an diesen eine geeignete Abscheideanordnung für feinteilige Partikel, Pulver oder Feinstpartikel an. Die Abscheideanordnung ist beispielsweise ein Zyklonabscheider oder ein Gewebefilter, aus welchem der mit dem Gasstrom aus dem Kalzinierer 1.2 ausgetragene Teil des Kathodenmaterial-Rezyklats 300 dann abgeschieden wird.

Darüber hinaus kann die Anordnung 1 eine Filteranordnung 10 zur Reinigung eines Abgasstroms 400 des Drehrohrofens 1 von Staub umfassen. Die Filteranordnung 10 ist dabei an geeigneter Stelle mit dem Trockner 1.1 und/oder dem Kalzinierer 1.2, insbesondere dem jeweiligen Behandlungsraum 6, strömungstechnisch gekoppelt. Die Filteranordnung 10 ist beispielsweise als ein Filter oder Abscheider, insbesondere ein Massenträgheitsabscheider oder eine andere geeignete Filtereinrichtung zur Filterung und Abscheidung von Staub aus dem Abgasstrom 400 ausgebildet.

Das erfindungsgemäße Verfahren zur Aufbereitung von verbrauchtem Kathodenmaterial 200von gebrauchten Lithium-Ionen-Batterien und/oder von Kathodenausschussmaterial 200.1 von fehlerhaft gefertigten und nicht gebrauchten Lithium-Ionen-Batterien zur Herstellung des Kathodenmaterial-Rezyklats 300 in der Anordnung 1 kann als ein geschlossener Recycling-Kreislauf 1000 ausgebildet sein.

Die Anordnung 1 umfasst zumindest den Trockner 1.1 mit dem ersten Materialeingang 2 für das Rohmaterial 100 für ungebrauchtes Kathodenmaterial und mit dem zweiten Materialeingang 4 für das verbrauchte Kathodenmaterial 200 und/oder des Kathodenausschussmaterials 200.1. Die Anordnung 1 umfasst darüber hinaus den Kalzinierer 1.2 mit dem Materialausgang 8 für das Kathodenmaterial-Rezyklat 300.

Dabei können der erste Materialeingang 2 und der zweite Materialeingang 4 in Längsausdehnung des Trockners 1.1 gesehen auf gleicher Länge angeordnet sein. Hierdurch können das Rohmaterial 100 und das verbrauchte Kathodenmaterial 200 und/oder das Kathodenausschussmaterial 200.1 zeitlich gleich lang im Trockner 1.1 thermisch behandelt, insbesondere getrocknet, und im Kalzinierer 1.2 zu dem Kathodenmaterial-Rezyklat 300 umgesetzt werden. Dabei können das Rohmaterial 100 und das verbrauchte Kathodenmaterial 200 und/oder das Kathodenausschussmaterial 200.1 in einem Verhältnis bevorzugt von 2:1, besonders bevorzugt von 3:1 oder 4:1, zueinander aufgegeben werden. Alternativ können das Rohmaterial 100 und das verbrauchte Kathodenmaterial 200 und/oder das Kathodenausschussmaterial 200.1 auch in gleicher Menge zueinander in den Reaktor 1 aufgegeben werden.

Das Rohmaterial 100 wird als erste flüssige Substanz in Form einer Suspension, Lösung oder Aufschlämmung in den Reaktor 1 aufgegeben. Das verbrauchte Kathodenmaterial 200 und/oder das Kathodenausschussmaterial 200.1 wird beziehungsweise werden als zweite flüssige Substanz in Form einer Suspension, Lösung oder Aufschlämmung aufgegeben.

Die erste flüssige Substanz und die zweite flüssige Substanz werden in den Behandlungszonen 6 des Trockners 1.1 und des Kalzinierers 1.2 thermisch behandelt und zu dem Kathodenmaterial-Rezyklat 300 (auch Kathodenaktivmaterial-Rezyklat genannt) umgesetzt. Anschließend wird das Kathodenmaterial-Rezyklat 300 in Pulverform aus dem Kalzinierer 1.2 über den Materialausgang 8 ausgebracht.

Das verbrauchte Kathodenmaterial 200 und/oder das Kathodenausschussmaterial 200.1 kann im gereinigten Zustand oder ungereinigten Zustand in den Trockner 1.1 zugeführt oder aufgegeben werden. Das "unverbrauchte" Kathodenmaterial aus dem Rohmaterial 100 und das verbrauchte Kathodenmaterial 200 und/oder das Kathodenausschussmaterial 200.1 können jeweils LiCoO2, LiMn2O4, LiNiO2, LiNil/3Mml/3Col/302 und/oder LiFePO4 umfassen. Bevorzugt können das Kathodenmaterial, das verbrauchte Kathodenmaterial und/oder Kathodenausschussmaterial beispielsweise Lithium-Nickel-Cobalt-Aluminium-Oxid (kurz NCA genannt) gemäß LiNi(x)Co(y)Al(z)O2; 1>= x>=0,8, 0,15 >= y<=0, 0,05>= z >=0), Lithium-Nickel-Mangan-Cobalt-Oxid (kurz NMCA genannt) gemäß LiNi(x)Mn(y)Co(z)Al(i)O2 mit 0,95>= x >=0,33, 0,5>=y >=0, 0,4>= z >=0, 0,02>= i >= 0, Lithium-Mangan-Eisen-Phosphat-Oxid (kurz LMFP genannt) gemäß LiFe(a)Mn(b)M(c) mit 1 >= a >= 0,1; 0,9 >= b >= 0; 0,25 >= c >= 0; M aus der Gruppe Zn, Mg, Ca, B, Al, LMFP und ternäre Phosphate miteinbeziehen: LiFe(a)Mn(b)M(c) mit 1 >= a >= 0,1; 0,9 >= b >= 0; 0,25 >= c >= 0; M aus der Gruppe Zn, Mg, Ca, B, Al, Lithium-Cobalt-Oxid (kurz LCO genannt) oder Lithium-Nickel-Oxid (kurz LNO genannt), insbesondere LiCoO2, LiMn2O4, LiNiO2, LiNi1/3Mm1/3Co1/3O2 und/oder LiFePO4, umfassen. Bevorzugt ist das verbrauchte Kathodenmaterial und/oder Kathodenausschussmaterial verbrauchtes Lithium-Eisen-Phosphat-Kathodenmaterial (auch kurz LFP-Kathodenmaterial oder LFP-Aktivmaterial genannt) und/oder Lithium-Eisen-Phosphat-Kathodenausschussmaterial (auch kurz LFP-Kathodenausschussmaterial oder LFP-Ausschussmaterial genannt).

Bevorzugt ist das verbrauchte Kathodenmaterial 200 ein verbrauchtes Lithium-Eisen-Phosphat-Kathodenmaterial (auch kurz LFP-Kathodenmaterial oder LFP-Aktivmaterial genannt) und/oder das Kathodenausschussmaterials 200.1, insbesondere Lithium-Eisen-Phosphat-Kathodenausschussmaterial.

Die erste flüssige Substanz und die zweite flüssige Substanz werden im Trockner 1.1 mit einer Behandlungstemperatur von 120°C bis 280°C, insbesondere von 200°C bis 250°C zu einem Zwischenprodukt 250 getrocknet, insbesondere sprühgetrocknet.

Das vorgetrocknete Zwischenprodukt 250 wird anschließend beispielsweise mit mindestens einer vorgegebenen Behandlungstemperatur von 500°C bis 1.000°C, insbesondere 600°C und 800°C, und mindestens einer vorgegebenen Verweildauer von 10 Minuten bis 120 Minuten, insbesondere 20 Minuten bis 45 Minuten, in einer inerten Atmosphäre in dem Kalzinierer 1.2 thermisch behandelt, insbesondere kalziniert.

Das zugeführte verbrauchte Kathodenmaterial 200 und/oder das Kathodenausschussmaterial 200.1 und das zugeführte Rohmaterial 100 werden im Ausführungsbeispiel nach Figur 1 in den Behandlungszonen 6 des Trockners 1.1 und des Kalzinierers 1.2 in mehreren Schritten synthetisiert, getrocknet, zum Beispiel sprühgetrocknet, und kalziniert. Dabei erfolgt innerhalb vorgegebener Verweilzeiten von einigen Minuten bis wenige Stunden aufgrund der fein verteilten direkten Behandlung im Heißgasstrom des Trockners 1.1 und des Kalzinierers 1.2 ein hinreichend hoher Energieeintrag. Durch die Reduzierung der Flüssigkeitsmenge in dem verbrauchten Kathodenmaterial 200 und/oder in dem Kathodenausschussmaterial und dem Rohmaterial 100 innerhalb der Verweilzeit und bei entsprechenden Temperaturen, insbesondere im Bereich von 500°C bis 1000°C, bevorzugt von 600°C bis 800°C, kann ein Sintern verhindert werden und ein Kathodenmaterial-Rezyklat 300 in Pulverform hergestellt und aus dem thermischen Reaktor ausgebracht werden.

Das Kathodenmaterial-Rezyklat 300 wird anschließend einer Nachbehandlungseinheit 14 zugeführt und zu einem homogenisierten Kathodenmaterial-Rezyklat 500 nachbehandelt. Insbesondere wird das ausgebrachte Kathodenmaterial-Rezyklat 300 mittels der Nachbehandlungseinheit 14 zu dem homogenisierten Kathodenmaterial-Rezyklat 500 vereinzelt, desagglomeriert, gestrahlt, gemahlen, gesiebt oder dergleichen. Die Nachbehandlungseinheit 14 ist beispielsweise als ein Rüttler, ein Ultraschallgerät, ein Strahlwerk, ein Mahlwerk, Sieb und/oder Filter ausgebildet. Das homogenisierte Kathodenmaterial-Rezyklat 500 weist nach der Nachbehandlung beispielsweise eine durchschnittliche Partikelgröße der Partikel von 1 µm bis 12 µm, insbesondere von 5 µm bis 10 µm, auf.

Darüber hinaus kann das homogenisierte Kathodenmaterial-Rezyklat 500 einer Beschichtungseinheit 16 zur Beschichtung einer Elektrode für eine Zelle einer Lithium-Ionen-Batterie zugeführt werden.

Die beschichtete Elektrode oder eine gefertigte Zelle mit der beschichteten Elektrode oder ein gefertigter Zellenstapel mit der beschichteten Elektrode kann anschließend einer Prüfeinheit 18 zur Prüfung, insbesondere Qualitätsprüfung, zugeführt werden. Mittels der Prüfeinheit 18 wird die beschichtete Elektrode, die Zelle oder der Zellenstapel anhand von vorgegebenen Parametern auf Qualität geprüft. Beschichtete Elektroden, Zellen oder Zellenstapel, für die ein Mangel festgestellt wurde, werden als Ausschuss 600, insbesondere als Ausschuss-Elektroden oder Ausschuss-Zellen oder Ausschuss-Zellstapel oder fehlerhaft gefertigte Batterie, aussortiert und dem Recycling-Kreislauf 1000 oder Aufbereitungsprozess wieder zugeführt.

Geprüfte fehlerfreie Elektroden, fehlerfreie Zellen oder fehlerfreie Zellenstapel werden nach der Prüfung einer üblichen Anwendung 20, zum Beispiel zur Montage einer Lithium-Ionen-Batterie und Verwendung in einem Elektroantrieb eines Fahrzeugs, zugeführt. Zur Wiederaufbereitung und Wiederverwertung dieser gebrauchten Elektroden, gebrauchten Zellen oder Zellenstapel von gebrauchten Lithium-Ionen-Batterien können diese als Rücklauf 800 dem Recycling-Kreislauf 1000 wieder zugeführt werden.

Der Ausschuss 600, insbesondere Ausschuss-Elektroden, Ausschuss-Zellen, Ausschuss-Zellstapel, und/oder der Rücklauf 800, insbesondere gebrauchte Elektroden, gebrauchte Zellen, gebrauchte Zellenstapel, gebrauchte Lithium-Ionen-Batterien, werden im Recycling-Kreislauf 1000 einer Trennstufe 22 zur Abtrennung von verbrauchtem Kathodenmaterial 200 zugeführt werden.

In der Trennstufe 22 erfolgt beispielsweise zunächst die Demontage der Elektrode aus der Batteriezelle oder dem Zellenstapel der Lithium-Ionen-Batterie. Anschließend wird die Elektrode demontiert. Insbesondere wird das verbrauchte Kathodenmaterial 200 (auch Kathodenaktivmaterial genannt) und/oder das Kathodenausschussmaterial 200.1 von der Elektrode mechanisch getrennt, beispielsweise durch Reiben, Wasserstrahlen oder dergleichen. Alternativ können genutzte oder gebrauchte Elektroden und/oder Ausschusselektroden in Wasser gebracht werden. Dabei löst sich das Bindersystem und es kann eine einfache Trennung von Elektrodenbasismaterial, wie Aluminiumfolie oder Aluminiumträger, und verbrauchten Kathodenmaterial 200, wie zum Beispiel LFP-Aktivmaterial, und/oder Kathodenausschussmaterial 200.1 durchgeführt werden. Nach Trennung des Basismaterials, insbesondere des Aluminiums, können die restlichen unlöslichen Bestandteile des verbrauchten Kathodenmaterials 200 und/oder des Kathodenausschussmaterials 200.1 abgetrennt werden. Diese restlichen unlöslichen Bestandteile werden zu der zweiten flüssigen Substanz, insbesondere eine wässrige Suspension, Lösung oder Aufschlämmung, des verbrauchten Kathodenmaterials 200 und/oder des Kathodenausschussmaterials 200.1vorverarbeitet und dem Recycling-Kreislauf 1000 nach der Trennstufe 22 zugeführt und über den zweiten Materialeingang 4 in den thermischen Reaktor 1 eingebracht und dort, wie zuvor beschrieben, getrocknet und kalziniert.

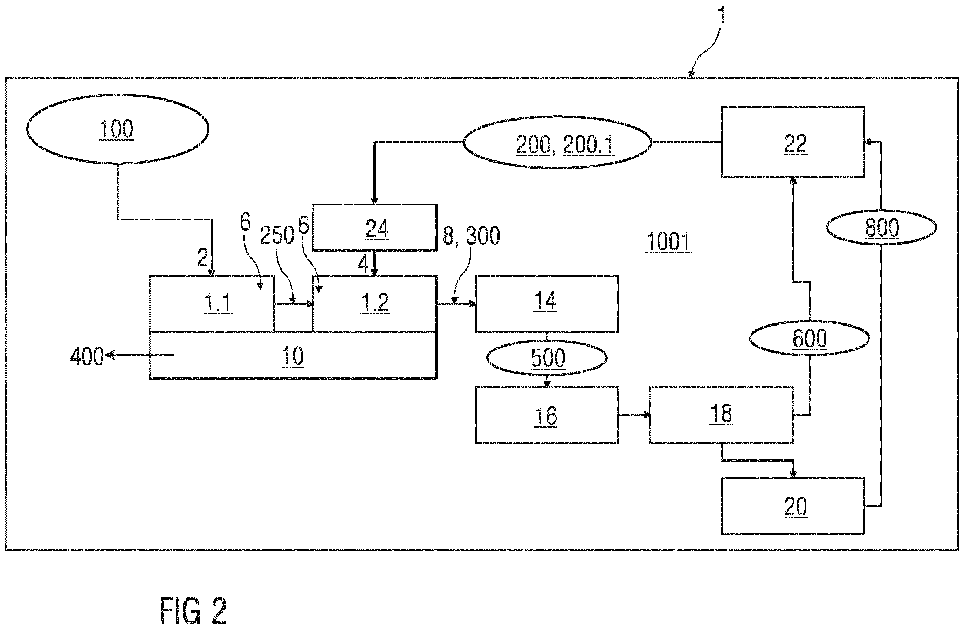

Figur 2 zeigt ein Blockschaltbild eines zweiten Ausführungsbeispiels eines erfindungsgemäßen Verfahrens zur Aufbereitung von verbrauchtem Kathodenmaterial 200 von Lithium-Ionen-Batterien und/oder Kathodenausschussmaterial 200.1 von fehlerhaft gefertigten und ungebrauchten Lithium-Ionen-Batterien zur Herstellung von Kathodenmaterial-Rezyklat 300 in einem weiteren geschlossenen Recycling-Kreislauf 1001.

Der Recycling-Kreislauf 1001 nach Figur 2 unterscheidet sich vom Recycling-Kreislauf 1000 nach Figur 1 lediglich darin, dass das verbrauchte Kathodenmaterial 200 und/oder das Kathodenausschussmaterial 200.1vor dem Einbringen in den thermischen Reaktor 1 in einem Trockner 24 separat vorgetrocknet wird. Das vorgetrocknete verbrauchte Kathodenmaterial 200 und/oder das vorgetrocknete Kathodenausschussmaterial 200.1 wird dann in Längsausdehnung und in Strömungsrichtung der Anordnung 1 gesehen zu einem späteren Zeitpunkt als das Rohmaterial 100 in die Anordnung 1 aufgegeben.

Insbesondere wird das vorgetrocknete verbrauchte Kathodenmaterial 200 und/oder das vorgetrocknete Kathodenausschussmaterial 200.1 in den Kalzinierer 1.2 der Anordnung 1 und somit nach dem Trockner 1.1 in den Recycling-Kreislauf 1001 aufgegeben. Hierzu ist der zweite Materialeingang 4 für das vorgetrocknete verbrauchte Kathodenmaterial 200 und/oder das vorgetrocknete Kathodenausschussmaterial 200.1 in Längsausdehnung der Anordnung 1 gesehen in einem Abstand zu dem ersten Materialeingang 2 für das Rohmaterial 100 angeordnet und mündet in den Kalzinierer 1.2. Der erste Materialeingang 2 ist an einem vorderen Ende Anordnung 1 an dem Trockner 1.1 angeordnet. Der zweite Materialeingang 4 ist im mittleren oder hinteren Bereich der Anordnung 1 an dem Kalzinierer 1.2 angeordnet.

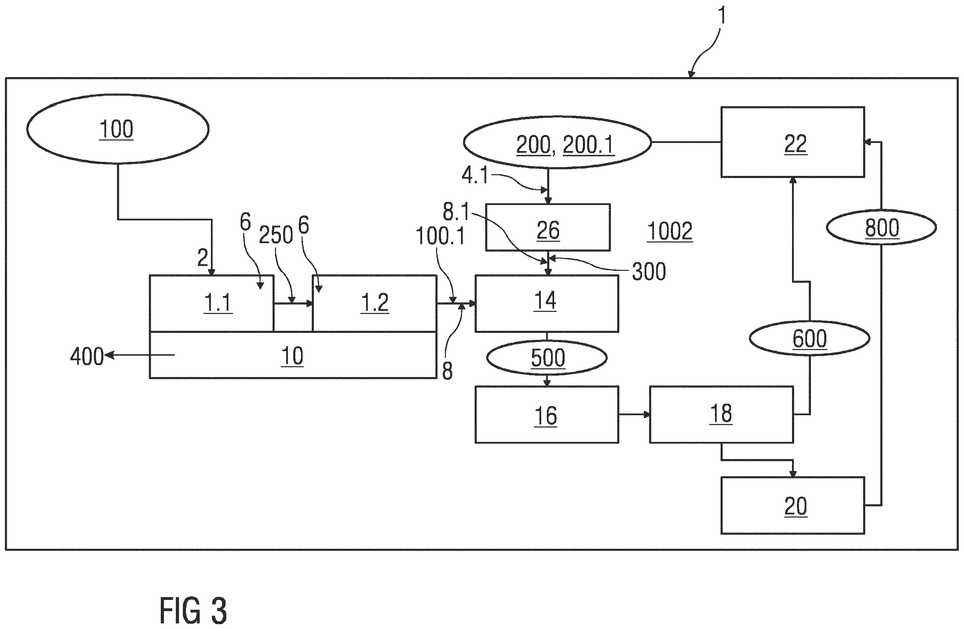

Figur 3 zeigt ein Blockschaltbild eines dritten Ausführungsbeispiels eines erfindungsgemäßen Verfahrens zur Aufbereitung von verbrauchtem Kathodenmaterial 200 von Lithium-Ionen-Batterien und/oder Kathodenausschussmaterial 200.1 von fehlerhaft gefertigten und ungebrauchten Lithium-Ionen-Batterien zur Herstellung von Kathodenmaterial-Rezyklat 300.

Der Recycling-Kreislauf 1002 nach Figur 3 unterscheidet sich vom Recycling-Kreislauf 1000 nach Figur 1 und 2 lediglich darin, dass das verbrauchte Kathodenmaterial 200 und/oder das Kathodenausschussmaterial 200.1 nicht in den Trockner 1.1 und auch nicht in den Kalzinierer 1.2 eingebracht wird, sondern in einer separaten thermischen Aufbereitungseinheit 26, insbesondere in einem separaten Trockner und Kalzinierer, separat vorgetrocknet und kalziniert und zu dem Kathodenmaterial-Rezyklat 300 umgesetzt wird. Im Trockner 1.1 und Kalzinierer 1.2 der Anordnung 1 wird nur das Rohmaterial 100 thermisch behandelt und zu unverbrauchtem Kathodenmaterial 100.1 umgesetzt.

Die thermische Aufbereitungseinheit 26 umfasst einen zweiten Materialeingang 4.1 zur Aufgabe des verbrauchten Kathodenmaterials 200 und/oder des Kathodenausschussmaterials 200.1 als eine zweite flüssige Substanz und einen zweiten Materialausgang 8.1 zum Ausbringen des Kathodenmaterial-Rezyklats 300 in Pulverform aus der Aufbereitungseinheit 26.

Das Kathodenmaterial-Rezyklat 300 und das unverbrauchte Kathodenmaterial 100.1 werden anschließend in der Nachbehandlungseinheit 14 zu dem gemischten homogenisierten Kathodenmaterial-Rezyklat 500 umgesetzt.

Das homogenisierte Kathodenmaterial-Rezyklat 500 wird anschließend analog zum Recycling-Kreislauf 1000 wiederverwendet und nach Verbrauch wiederaufbereitet.

### BEZUGSZEICHENLISTE

- 1: Anordnung zur Aufbereitung
- 1.1: Trockner
- 1.2: Kalzinierer
- 2: erster Materialeingang
- 4,4.1: zweiter Materialeingang
- 6: thermische Behandlungszone
- 8: Materialausgang
- 8.1: zweiter Materialausgang
- 10: Filteranordnung
- 14: Nachbehandlungseinheit
- 16: Beschichtungseinheit
- 18: Prüfeinheit
- 20: Anwendung
- 22: Trennstufe
- 24: Trockner
- 26: thermische Aufbereitungseinheit
- 100: Rohmaterial
- 100.1: unverbrauchtes Kathodenmaterial
- 200: verbrauchtes Kathodenmaterial
- 200.1: Kathodenausschussmaterial
- 250: Zwischenprodukt
- 300: Kathodenmaterial-Rezyklat
- 400: Abgasstrom
- 500: homogenisiertes Kathodenmaterial-Rezyklat
- 600: Ausschuss
- 800: Rücklauf
- 1000, 1001, 1002: Recycling-Kreislauf

## Patentansprüche

1. Verfahren zur Aufbereitung von verbrauchtem Kathodenmaterial (200) von gebrauchten Lithium-Ionen-Batterien und/oder von Kathodenausschussmaterial (200.1) von fehlerhaft gefertigten und nicht gebrauchten Lithium-Ionen-Batterien zur Herstellung eines Kathodenmaterial-Rezyklats (300), wobei das Verfahren folgende Schritte umfasst:
- Zuführen eines Rohmaterials (100) eines Kathodenmaterials als eine erste flüssige Substanz in eine Anordnung (1) zur Aufbereitung,
- Zuführen eines verbrauchten Kathodenmaterials (200) und/oder von Kathodenausschussmaterial als eine zweite flüssige Substanz in die Anordnung (1),
- thermische Behandlung und Umsetzung der ersten flüssigen Substanz und der zweiten flüssigen Substanz in das Kathodenmaterial-Rezyklat (300) in mindestens einer thermischen Behandlungszone (6) der Anordnung (1), und
- Ausbringen des Kathodenmaterial-Rezyklats (300) in Pulverform aus der Anordnung (1).

2. Verfahren nach Anspruch 1, wobei die erste Substanz und die zweite Substanz mit mindestens einer vorgegebenen Behandlungstemperatur und mindestens einer vorgegebenen Verweildauer in der Anordnung (1) in einer inerten Atmosphäre thermisch behandelt werden.

3. Verfahren nach Anspruch 1 oder 2, wobei die erste flüssige Substanz in der Anordnung (1) getrocknet und kalziniert wird und wobei die zweite flüssige Substanz in der Anordnung (1) getrocknet und kalziniert oder separat getrocknet und/oder kalziniert wird.

4. Verfahren nach einem der vorhergehenden Ansprüche, wobei die erste flüssige Substanz und die zweite flüssige Substanz in der Anordnung (1) stufenweise bei einer Behandlungstemperatur von 100°C bis 1.000°C behandelt werden.

5. Verfahren nach einem der vorhergehenden Ansprüche, wobei die zweite flüssige Substanz zeitlich kürzer in der Anordnung (1) thermisch behandelt wird als die erste flüssige Substanz oder wobei die zweite flüssige Substanz und die erste flüssige Substanz zeitlich gleich lang in der Anordnung (1) thermisch behandelt werden.

6. Verfahren nach einem der vorhergehenden Ansprüche, wobei die erste flüssige Substanz mit einer ersten Verweilzeit von 10 Minuten bis 120 Minuten in einem Trockner (1.1) und einem Kalzinierer (1.2) thermisch behandelt wird und wobei die zweite flüssige Substanz mit einer zweiten Verweilzeit von 15 Minuten bis 120 Minuten in einem Trockner (1.1) und einem Kalzinierer (1.2) oder in einer Aufbereitungseinheit (26) thermisch behandelt wird.

7. Verfahren nach einem der vorhergehenden Ansprüche, wobei die erste flüssige Substanz und die zweite flüssige Substanz in einem Verhältnis von 2:1, insbesondere 3:1 oder 4:1, aufgegeben werden.

8. Verfahren zur Aufbereitung von verbrauchtem Kathodenmaterial (200) von gebrauchten Lithium-Ionen-Batterien und/oder von Kathodenausschussmaterial (200.1) von gefertigten und nicht gebrauchten Lithium-Ionen-Batterien zur Herstellung eines Kathodenmaterial-Rezyklats (300),
wobei das Verfahren folgende Schritte umfasst:
- Zuführen eines Rohmaterials (100) eines Kathodenmaterials als eine erste flüssige Substanz in eine Anordnung (1) zur Aufbereitung und thermische Behandlung und Umsetzung der ersten flüssigen Substanz in ein unverbrauchtes Kathodenmaterial (100.1) in mindestens einer Behandlungszone (6) der Anordnung (1) und Ausbringen des unverbrauchten Kathodenmaterials (100.1) in Pulverform aus der Anordnung (1), insbesondere dem Kalzinierer (1.2),
- Zuführen des verbrauchten Kathodenmaterials (200) und/oder von Kathodenausschussmaterial (200.1) als eine zweite flüssige Substanz und separate thermische Behandlung und Umsetzung der zweiten flüssigen Substanz in das Kathodenmaterial-Rezyklat (300) in Pulverform in einer separaten thermischen Aufbereitungseinheit (26) und Ausbringen des Kathodenmaterial-Rezyklats (300) in Pulverform aus der Aufbereitungseinheit (26).

9. Verfahren nach einem der vorhergehenden Ansprüche, wobei die erste flüssige Substanz des Rohmaterials (100) in Form einer ersten Suspension oder ersten Lösung oder ersten Aufschlämmung bereitgestellt wird.

10. Verfahren nach einem der vorhergehenden Ansprüche, wobei die zweite flüssige Substanz des verbrauchten Kathodenmaterials (200) und/oder des Kathodenausschussmaterials (200.1) in Form einer zweiten Suspension oder zweiten Lösung oder zweiten Aufschlämmung bereitgestellt wird.

11. Verfahren nach einem der vorhergehenden Ansprüche, wobei das unverbrauchte Kathodenmaterial (100.1) in Pulverform und/oder das Kathodenmaterial-Rezyklat (300) in Pulverform einer Nachbehandlungseinheit (14) zugeführt und als ein homogenisiertes Kathodenmaterial-Rezyklat (500) ausgebracht wird.

12. Verfahren nach Anspruch 11, wobei das homogenisierte Kathodenmaterial-Rezyklat (500) einer Beschichtungseinheit (16) zur Beschichtung einer Elektrode zugeführt wird.

13. Verfahren nach Anspruch 12, wobei die beschichtete Elektrode und/oder eine gefertigte Zelle mit der beschichteten Elektrode oder ein gefertigter Zellenstapel mit der beschichteten Elektrode einer Prüfeinheit (18) zur Prüfung zugeführt wird und ein identifizierter Ausschuss (600) in den Aufbereitungsprozess zurückgeführt wird und eine geprüfte fehlerfreie Elektrode oder fehlerfreie Zelle oder fehlerfreier Zellenstapel einer Anwendung (20) zugeführt wird.

14. Verfahren nach einem der vorhergehenden Ansprüche oder nach Anspruch 13, wobei eine gebrauchte Elektrode oder eine gebrauchte Zelle oder gebrauchter Zellenstapel einer gebrauchten Lithium-Ionen-Batterie als Rücklauf (800) und/oder der identifizierte Ausschuss (600) einer Trennstufe (22) zur Abtrennung von gebrauchten Kathodenmaterial (200) beziehungsweise von Kathodenausschussmaterial (200.1) zugeführt wird.

15. Anordnung (1) zur Aufbereitung von verbrauchtem Kathodenmaterial (200) von gebrauchten Lithium-Ionen-Batterien und/oder von Kathodenausschussmaterial (200.1) von gefertigten und nicht gebrauchten Lithium-Ionen-Batterien zur Herstellung eines Kathodenmaterial-Rezyklats (300), wobei die Anordnung (1) mindestens
- einen ersten Materialeingang (2) zur Aufgabe eines Rohmaterials (100) eines Kathodenmaterials als eine erste flüssige Substanz in die Anordnung (1), insbesondere in einen Trockner (1.1),
- einen zweiten Materialeingang (4) zur Aufgabe des verbrauchten Kathodenmaterials (200) und/oder von Kathodenausschussmaterial (200.1) als eine zweite flüssige Substanz in die Anordnung (1), insbesondere in den Trockner (1.1),
- mindestens einen Behandlungsraum (6), insbesondere in dem Trockner (1.1) und in einem Kalzinierer (1.2), zur thermischen Behandlung und Umsetzung der zweiten flüssigen Substanz und der ersten flüssigen Substanz in das Kathodenmaterial-Rezyklat (300) und
- einen Materialausgang (8) zur Ausgabe des Kathodenmaterial-Rezyklats (300) in Pulverform aus der Anordnung (1), insbesondere aus dem Kalzinierer (1.2), umfasst.

16. Anordnung (1) zur Aufbereitung von verbrauchtem Kathodenmaterial (200) von gebrauchten Lithium-Ionen-Batterien und/oder von Kathodenausschussmaterial (200.1) von gefertigten und nicht gebrauchten Lithium-Ionen-Batterien zur Herstellung eines Kathodenmaterial-Rezyklats (300), wobei
- die Anordnung (1) mindestens einen Trockner (1.1) mit einem ersten Materialeingang (2) zur Aufgabe eines Rohmaterials (100) eines Kathodenmaterials als eine erste flüssige Substanz und einen Kalzinierer (1.2) für das getrocknete Rohmaterial (100) sowie einen ersten Materialausgang (8) zum Ausbringen des unverbrauchten Kathodenmaterials (100.1) in Pulverform aus dem Kalzinierer (1.2) umfasst, wobei der Trockner (1.1) und der Kalzinierer (1.2) jeweils eine thermische Behandlungszone (6) zur thermischen Behandlung und Umsetzung der ersten flüssigen Substanz in ein unverbrauchtes Kathodenmaterial (100.1) aufweisen, und
- die Anordnung (1) eine separate thermische Aufbereitungseinheit (26) umfasst, wobei die thermische Aufbereitungseinheit (26) einen zweiten Materialeingang (4.1) zur Aufgabe des verbrauchten Kathodenmaterials (200) und/oder des Kathodenausschussmaterials (200.1) als eine zweite flüssige Substanz und mindestens eine thermische Behandlungszone zur separaten thermischen Behandlung und Umsetzung der zweiten flüssigen Substanz in das Kathodenmaterial-Rezyklat (300) in Pulverform in der separaten thermischen Aufbereitungseinheit (26) sowie einen zweiten Materialausgang (8.1) zum Ausbringen des Kathodenmaterial-Rezyklats (300) in Pulverform aus der Aufbereitungseinheit (26) umfasst.

17. Anordnung (1) nach Anspruch 15 oder 16, wobei dem Kalzinierer (1.2) und optional der Aufbereitungseinheit (26) eine Nachbehandlungseinheit (14) nachgeschaltet ist zur Nachbehandlung und Umsetzung des unverbrauchten Kathodenmaterials (100.1) und/oder des Kathodenmaterial-Rezyklats (300) in ein homogenisiertes Kathodenmaterial-Rezyklat (500).

18. Anordnung (1) nach Anspruch 17, wobei eine Beschichtungseinheit (16) zur Beschichtung einer Elektrode mit dem homogenisierten Kathodenmaterial-Rezyklat (500) vorgesehen ist.

19. Anordnung (1) nach Anspruch 18, wobei eine Prüfeinheit (18) vorgesehen ist zur Prüfung der Elektrode, einer Zelle mit einer solchen Elektrode, einem Zellenstapel mit einer solchen Elektrode oder einer Batterie mit einer solchen Elektrode und Identifizierung einer Ausschuss-Elektrode vorgesehen ist.

20. Anordnung (1) nach einem der vorhergehenden Ansprüche 15 bis 18 oder nach Anspruch 19, wobei eine Trennstufe (22) zur Abtrennung von gebrauchtem Kathodenmaterial (200) einer gebrauchten Elektrode und optional einer Ausschuss-Elektrode vorgesehen ist.
